# EUROPEAN PATENT APPLICATION

(11) **EP 4 768 251 A1**
(43) Date of publication of application: **01.07.2026**
(21) Application number: 24872624.2
(22) Date of filing: 12.03.2024
(51) Int. Cl.: B41F 15/36, B41F 15/18, B41F 33/00, B41F 15/46, B41F 15/40, A23P 10/10

(54) **MASK PRINTING-TYPE EDIBLE RAW MATERIAL LAMINATING DEVICE**

(30) Priority: 27.09.2023 KR 20230130808
(71) Applicant: People & Technology Inc., Gumi-si, Gyeongsangbuk-do 39422 (KR)
(72) Inventor: LEE, Byeong Geun, Chilgok-gun, Gyeongsangbuk-do 39823 (KR); SHIN, Soonwoo, Gumi-si, Gyeongsangbuk-do 39212 (KR); KIM, Joonsup, Gumi-si, Gyeongsangbuk-do 39422 (KR)
(74) Representative: BCKIP Part mbB
(86) International application number: PCT/KR2024/003184
(87) International publication number: WO 2025/070909

(57) **Abstract**

The present invention relates to a mask printing-type edible raw material laminating device capable of producing edible products in various shapes having a laminated structure through a printing method using a printing mask. More specifically, the present invention relates to a mask printing-type edible raw material laminating device wherein, while a fabric having a preprinted material made of an edible raw material is made to pass, a laminated/printed material made of an edible raw material is additionally printed on the preprinted material. The mask printing-type edible raw material laminating device comprises: a support structure for providing a support force; a fabric guide means mounted in the support structure so as to guide transfer of the fabric; a fabric prop portion installed below the fabric transfer path such that, when a laminated/printed material is printed on the preprinted material, the fabric is propped up and supported; a printing mask installed above the fabric prop portion in a position adjustable manner, the printing mask having multiple printing holes formed therein such that an editable raw material to be laminated on the preprinted material passes therethrough; a mask positioning portion for positioning the printing mask; and a printing unit for injecting an edible raw material onto the positioned printing mask and then spreading same such that the edible raw material is laminated on the preprinted material through the printing holes.

## Description

### [Technical Field]

The present invention relates to an apparatus for laminating edible materials for producing a film-type edible product by stacking edible ingredients on an upper surface of a provided substrate using a printing method. More specifically, the present invention relates to a mask printing-type edible material laminating apparatus capable of producing products having various configurations by additionally stacking a printed layer on a previously printed ingredient layer.

### [Background Art]

A film-type edible product is formed by mixing various food ingredients and shaping the mixture into a thin film, having a size suitable for placement in the mouth. When such a film-type edible product is, for example, placed on the tongue, it gradually dissolves, allowing substances contained in the product to be absorbed into the body.

Various types of such film-type edible products exist depending on their intended purpose, for example, those for removing bad breath, maintaining dental hygiene, or freshening the mouth after meals. Since film-type edible products have the form of a thin film, they are vulnerable to moisture and are therefore generally individually sealed in packaging.

As an apparatus for manufacturing such film-type edible products, Korean Patent Registration No. 10-1214140 (Method and Apparatus for Manufacturing Edible Film Products) has been disclosed.

However, the disclosed manufacturing apparatus produces edible films in the form of a large sheet and then cuts the sheet, employing a pick-and-place method, which has the disadvantage of being unable to realize various shapes. That is, only simple rectangular shapes can be produced.

In addition, since coating of the raw materials is performed in a single step, when a small amount of material is loaded, the loss of usable material relative to the input amount is significant, and products having a laminated structure cannot be produced.

Furthermore, although manufacturing apparatuses applying a printing mask method have also been used, conventional printing mask-type manufacturing apparatuses have difficulty printing products with patterns having large openings. In addition, since raw materials are poured onto the printing mask at once for printing, the exposure time of paste-like materials on the printing mask is prolonged, making them vulnerable to contamination. Moreover, due to viscosity changes in the raw materials, it is difficult to produce products with uniform quality, and there is also a problem of significant material loss.

In addition, roll-to-roll type manufacturing apparatuses are advantageous for mass production; however, due to the rectangular frame size of the printing mask, there are limitations in performing continuous coating while maintaining a constant pattern pitch, and there is also a drawback in that the printed pattern may come into contact with a roll or other mechanical components.

### [Detailed Description of the Invention]

### [Technical Problem]

An object of the present invention is to provide a mask printing-type edible material laminating apparatus capable of producing edible products having various shapes and a laminated structure through a printing method using a printing mask.

### [Technical Solution]

As a technical solution for achieving the above object, a mask printing-type edible material laminating apparatus according to the present invention performs additional printing of a laminated print made of an edible material on a pre-printed product while passing a substrate on which the pre-printed product made of the edible material is printed, the apparatus comprising: a support structure providing structural support; a substrate guide means mounted within the support structure for guiding the transfer of the substrate; a substrate support part installed below a transfer path of the substrate to support the substrate when printing the laminated print on the pre-printed product; a printing mask installed above the substrate support part in a position-adjustable manner and having a plurality of printing holes through which the edible material to be laminated on the pre-printed product passes; a mask position adjusting unit for adjusting a position of the printing mask; and a printing unit configured to spread the edible material after supplying the edible material onto the printing mask whose position is adjusted, such that the edible material passes through the printing holes and is laminated on the pre-printed product.

In addition, a plurality of the pre-printed products are arranged on an upper surface of the substrate at predetermined intervals, and the printing holes of the printing mask correspond one-to-one with the pre-printed products.

Further, the mask position adjusting unit aligns the printing holes with the pre-printed products and includes: a mask support frame fixed horizontally above the substrate support part and accommodating the printing mask therein; an X driving unit for moving the printing mask in a direction parallel to a transfer direction of the substrate while being supported by the mask support frame; a Y driving unit installed on the mask support frame for adjusting a position of the printing mask in a direction perpendicular to the transfer direction of the substrate; and a Z driving unit supported by the mask support frame for vertically moving the printing mask.

The X driving unit includes: a first lead screw horizontally installed in a direction parallel to the transfer direction of the substrate; an X motor for rotationally driving the first lead screw; and a connection body coupled to the first lead screw, configured to reciprocate linearly upon rotation of the first lead screw, and coupled to the printing mask.

The Y driving unit includes: a second lead screw horizontally installed in a direction perpendicular to the transfer direction of the substrate; a Y motor for rotationally driving the second lead screw; and a second nut block coupled to the second lead screw, configured to reciprocate linearly upon rotation of the second lead screw, and connected to the printing mask.

In addition, the printing unit includes: a printing head having a material discharge part for supplying the edible material onto the printing mask, a squeegee for spreading the supplied edible material on a mask plate, and a squeegee lifting means for moving the squeegee up and down; and a head driving unit configured to reciprocate the printing head such that the squeegee spreads the edible material on the mask plate.

Further, the head driving unit includes: a head transfer rail extending in a direction perpendicular to the transfer direction of the substrate; a slider slidably mounted on the head transfer rail; and a supporter fixed to the slider and supporting the printing head. The printing unit further includes: a lifting support plate supported by the supporter so as to be movable up and down; and a support plate lifting unit for adjusting a height of the lifting support plate. The squeegee comprises two squeegees disposed in parallel and spaced apart from each other below the lifting support plate with the material discharge part interposed therebetween, and the squeegee lifting means comprises squeegee cylinders for independently lifting the respective squeegees.

In addition, the material discharge part includes: a bank serving as a space for temporarily accommodating the edible material supplied from the outside; and a slit die having one or more discharge slits for downwardly discharging the edible material in the bank onto the printing mask.

### [Advantageous Effects]

The mask printing-type edible material laminating apparatus of the present invention configured as described above is capable of producing edible products having various shapes and a laminated structure through a printing method using a printing mask.

### [Description of Drawings]

FIG. 1 is a view illustrating an edible product laminated by an edible material laminating apparatus according to an embodiment of the present invention.
FIGS. 2A to 2E are cross-sectional views illustrating a laminated structure of an edible product laminated by the edible material laminating apparatus according to an embodiment of the present invention.
FIG. 3 is a perspective view of a mask printing-type edible material laminating apparatus according to an embodiment of the present invention.
FIG. 4 is a front view showing an internal structure of the laminating apparatus illustrated in FIG. 3.
FIG. 5 is a view illustrating a substrate support part of the laminating apparatus illustrated in FIG. 3.
FIG. 6 is a view for explaining a relative arrangement of rollers inside the laminating apparatus illustrated in FIG. 3.
FIG. 7 is a view illustrating a printing unit and a substrate support part of the laminating apparatus illustrated in FIG. 3 in a separated manner.
FIGS. 8 and 9 are perspective views for explaining a position adjustment method of the printing mask illustrated in FIG. 7.
FIG. 10 is a view separately illustrating the printing mask and a printing head of FIG. 7.
FIG. 11 is a side view of the printing head of FIG. 10.
FIG. 12 is an exploded perspective view of the slit die illustrated in FIG. 11.
FIGS. 13A and 13B are views for explaining an operation of the printing head of FIG. 12.

### [Best Mode]

Hereinafter, an embodiment according to the present invention will be described in more detail with reference to the accompanying drawings.

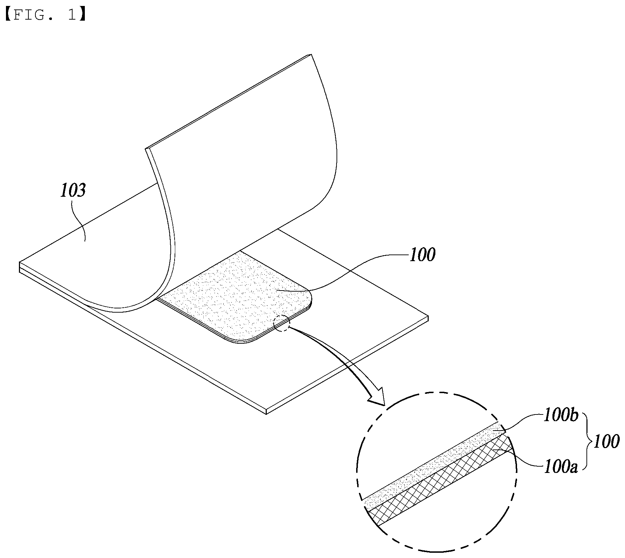

FIG. 1 is a view schematically illustrating an edible product (100) laminated by an edible material laminating apparatus according to an embodiment of the present invention.

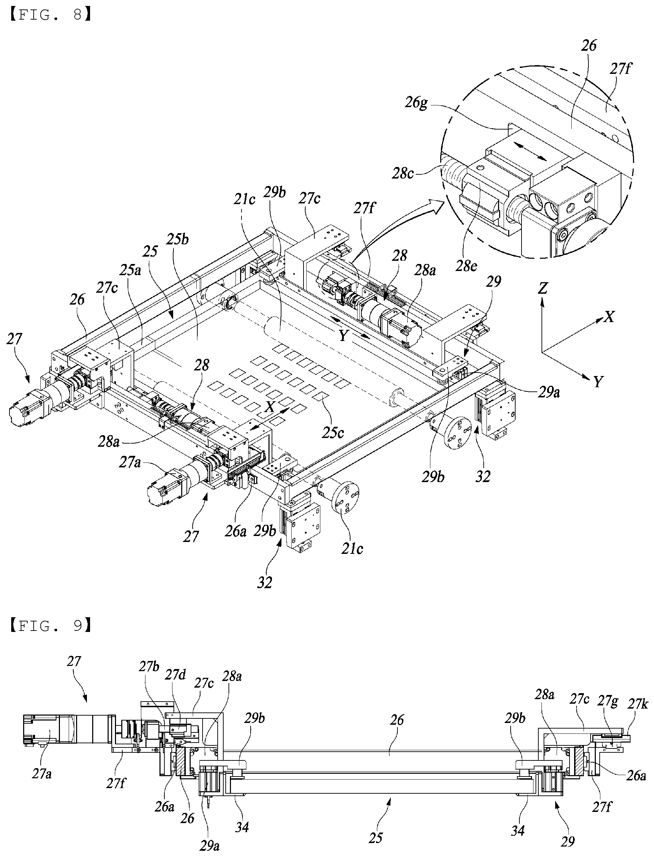

The illustrated edible product (100) is manufactured by printing an edible material using a screen printing method. That is, the edible product is produced by supplying a paste-type edible material onto a printing mask (25) having a plurality of printing holes (25c in FIG. 8) and performing screen printing. Naturally, the shape of the edible product (100) reflects the shape of the printing holes (25c) of the printing mask. The edible material itself may be of a conventional type.

As described above, since the edible product (100) is manufactured using a printing method with the printing mask (25), the shape of the product body (100) may vary depending on the shape of the printing holes (25c). By forming the printing holes (25c) in various shapes, edible products (100) having diverse shapes can be produced. For reference, conventional apparatuses for manufacturing edible products have a structure in which edible material is first spread into a wide sheet form and then cut along multiple straight lines intersecting each other. Accordingly, conventional edible products are limited to simple rectangular shapes.

In particular, as enlarged in FIG. 1, the edible product (100) has a laminated structure. That is, it includes a laminated structure of a pre-printed product (100a) and a laminated print (100b). The pre-printed product (100a) is previously formed by a separate apparatus (not shown).

Ultimately, the edible material laminating apparatus (10) of the present embodiment is an apparatus for additionally laminating the laminated print (100b) onto the pre-printed product (100a) already printed on the substrate. In order to accurately place the laminated print (100b) on the pre-printed product (100a), a mask position adjusting unit described later is applied, and a detailed description thereof will be provided below.

Various effects can be obtained by applying such a laminating method. Representative effects include the ability to manufacture edible products having various thicknesses and to integrate different types of edible products into a single product.

For example, a thick-type edible product that cannot be manufactured by a single printing process can be produced using the laminating apparatus of the present embodiment, and different types of edible products can be formed into a single film. Each printed layer constituting the edible product (100) may be laminated using edible materials having different nutritional components.

In addition, although the edible product (100) illustrated in FIG. 1 has a two-layer laminated structure, the number of layers of the edible product is not limited thereto and may be three or more.

Reference numeral 103 in FIG. 1 denotes a packaging material. The edible product (100) is hermetically sealed and accommodated in the packaging material (103), and a user can consume the product by tearing the packaging material (103).

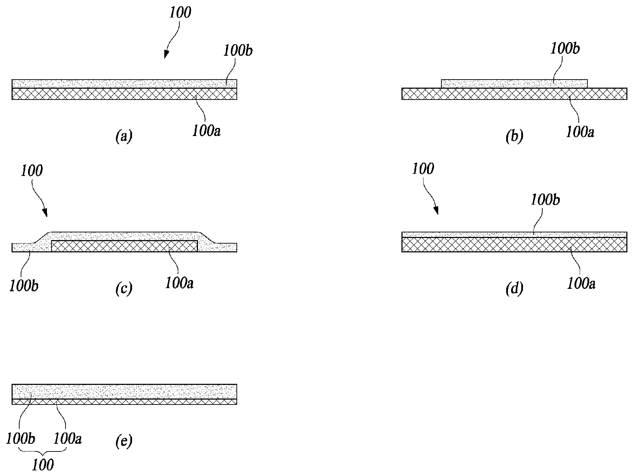

FIGS. 2A to 2E are cross-sectional views illustrating laminated structures of edible products laminated by the edible material laminating apparatus according to an embodiment of the present invention.

The thickness, shape, and size of the laminated print (100b) laminated on the pre-printed product (100a) vary depending on the shape of the printing mask (25) included in the laminating apparatus (10). Naturally, as the mask plate (25b) of the printing mask (25) becomes thicker, the thickness of the laminated print (100b) also increases.

In FIG. 2A, the edible product (100) is a type in which the thickness and width of the pre-printed product (100a) and the laminated print (100b) are the same. In contrast, in FIG. 2B, the width of the laminated print (100b) is smaller than that of the pre-printed product (100a), allowing the pre-printed product (100a) to be observed from above. In FIG. 2C, the width of the laminated print (100b) is larger than that of the pre-printed product (100a), such that the laminated print (100b) completely covers the pre-printed product (100a). In FIG. 2D, the thickness of the laminated print (100b) is thinner than that of the pre-printed product (100a), whereas in FIG. 2E, the laminated print (100b) is thicker than the pre-printed product (100a).

As described above, various designs of edible products are possible by applying the laminating apparatus (10) of the present embodiment.

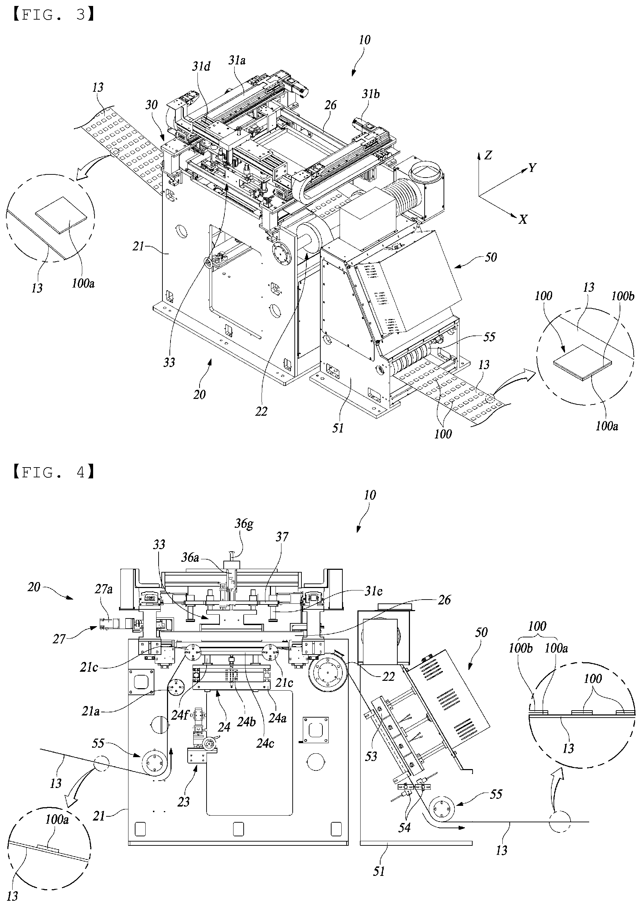

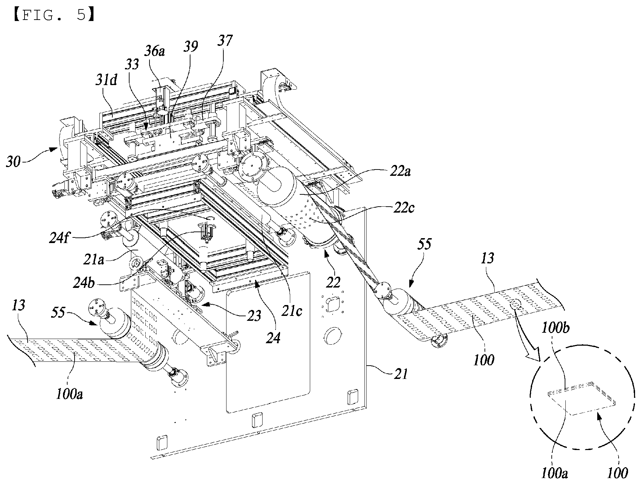

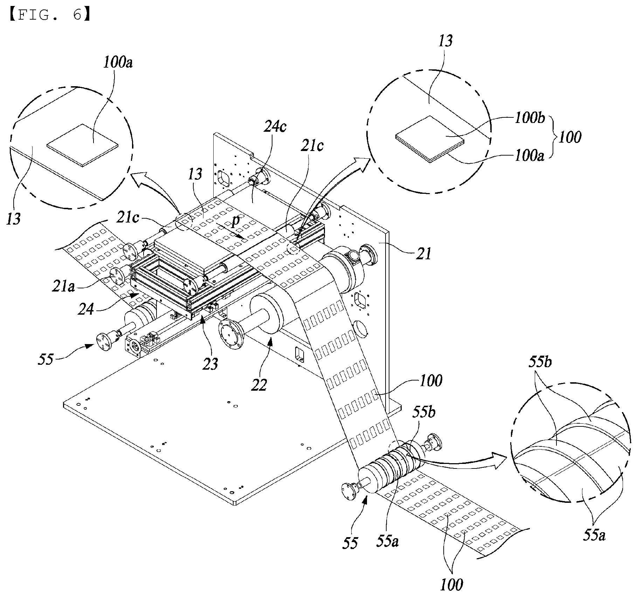

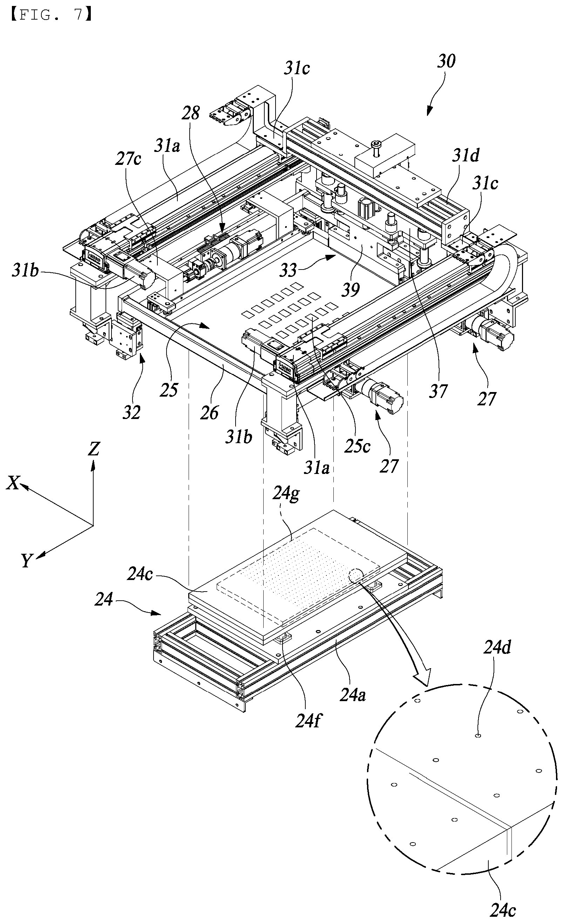

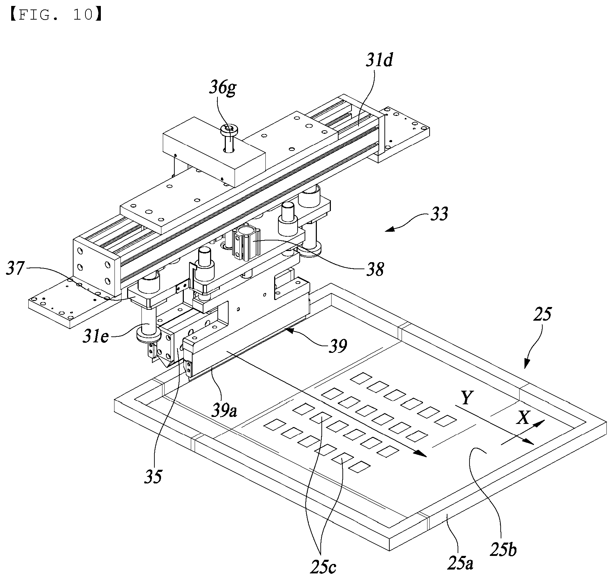

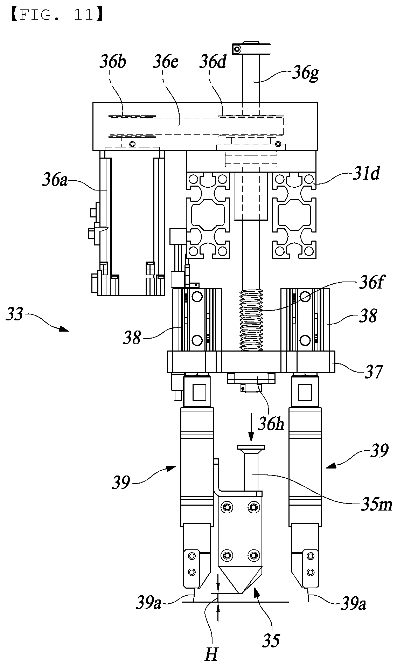

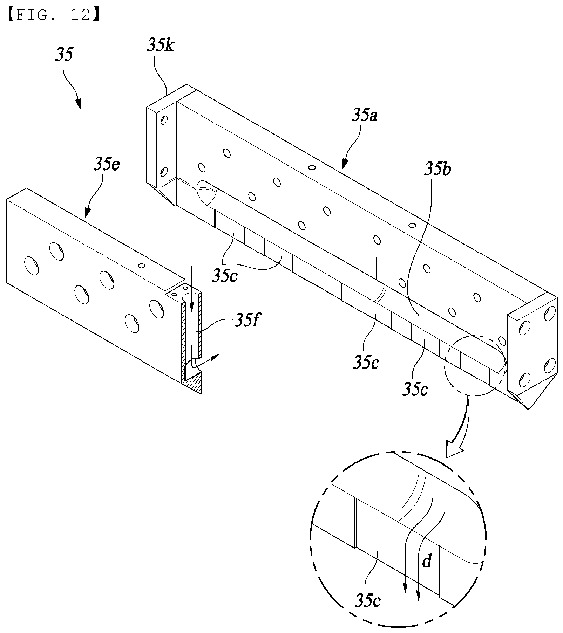

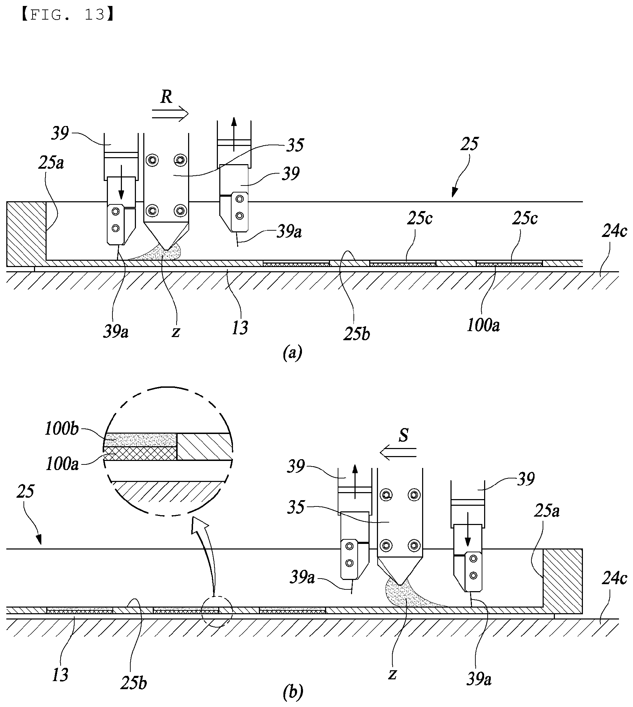

FIG. 3 is a perspective view of a mask printing-type edible material laminating apparatus according to an embodiment of the present invention, FIG. 4 is a front view showing an internal structure of the laminating apparatus illustrated in FIG. 3, and FIG. 5 is a view illustrating a substrate support part of the laminating apparatus illustrated in FIG. 3. FIG. 6 is a view for explaining a relative arrangement of rollers inside the laminating apparatus of FIG. 3, and FIG. 7 is a view illustrating a printing unit and a substrate support part of the laminating apparatus of FIG. 3 in a separated manner. FIGS. 8 and 9 are views for explaining a position adjustment method of the printing mask illustrated in FIG. 7, FIG. 10 is a view separately illustrating the printing mask and a printing head of FIG. 7, FIG. 11 is a side view of the printing head of FIG. 10, FIG. 12 is an exploded perspective view of the slit die illustrated in FIG. 11, and FIGS. 13A and 13B are views for explaining an operation of the printing head of FIG. 12.

As illustrated, the mask printing-type edible material laminating apparatus (10) according to the present embodiment includes a laminating printer (20) and a heating dryer (50) as basic configurations.

The laminating printer (20) additionally coats the laminated print (100b) onto the upper surface of the pre-printed product (100a), which enters the apparatus in a state already printed on the substrate (13), and the heating dryer (50) heats and dries the printed edible material.

The laminating apparatus (10) passes the substrate (13) on which the pre-printed product (100a) is printed and additionally prints the laminated print (100b) on the pre-printed product (100a). The edible material of the laminated print (100b) may be the same as or different from that of the pre-printed product (100a).

The laminating apparatus (10) includes a support structure (21), a substrate guide means, a substrate support part (24), a printing mask (25), a mask position adjusting unit, and a printing unit (30).

The support structure (21) is a fixed frame erected on the ground. The substrate (13) supplied from the outside passes through the interior of the support structure (21). As illustrated in FIG. 3, the pre-printed product (100a) is printed on the upper surface of the incoming substrate (13).

A plurality of the pre-printed products (100a) are arranged at predetermined intervals on the upper surface of the substrate. In the present embodiment, the pre-printed product (100a) and the laminated print (100b) are described as simple rectangular shapes by way of example; however, their shapes may be varied in numerous ways.

The substrate guide means is mounted within the support structure and guides the transfer of the substrate (13) passing through the support structure (21). The substrate guide means includes a guide roll (21a), a leveling roll (21c), a suction roll (22), and two pressing rollers (55). Among the two pressing rollers (55), the pressing roller (55) on the right side in FIG. 5 is accommodated in a cabinet (51) of the heating dryer (50).

The pressing roller (55) located on the left side in FIG. 4 guides the movement of the substrate (13) toward the guide roll (21a). The pressing roller (55) installed on the right presses down the substrate (13) that has passed through a heater (53) and guides it to subsequent equipment. The structures of the pressing rollers (55) on both sides are identical.

The pressing roller (55) located on the left side in FIG. 4 supports the substrate (13) downward. A pressing roller (55), rather than a flat roller (a roller having no unevenness on its outer circumferential surface), is used because the pre-printed product (100a) is present on the substrate (13). If a flat roller were used, the pre-printed product (100a) would be pressed and damaged by the pressure of the flat roller.

A passing groove (55a) and a pressing ring portion (55b) are formed on the outer circumferential surface of the pressing roller (55). The passing groove (55a) is a groove having a predetermined width and depth formed along the circumferential direction of the pressing roller (55), through which the pre-printed product (100a) printed on the substrate (13) passes. Since the passing groove (55a) is formed in the pressing roller (55), the pre-printed product (100a) is prevented from being pressed and damaged even when the substrate (13) passes under the pressing roller (55) during transfer. The pressing ring portion (55b) is a protruding portion extending along the circumferential direction of the pressing roller (55) and contacts the substrate (13) between the pre-printed products (100a) to maintain the substrate in a taut state.

The guide roll (21a) is a flat roller that guides the substrate (13), having passed through one of the pressing rollers (55), toward the leveling roll (21c). Since the guide roll (21a) contacts a lower surface of the substrate (13), there is no risk of damaging the pre-printed product (100a).

The leveling roll (21c) serves to maintain the substrate (13) horizontally between the substrate support part (24) and the printing mask (25). Two leveling rolls (21c) form a set and are installed on opposite sides with the suction horizontal plate (24c) of the substrate support part (24) interposed therebetween, thereby forming a symmetrical arrangement. The substrate (13) supported by the leveling rolls (21c) remains horizontal and parallel to an upper surface of the suction horizontal plate (24c).

The suction roll (22) transports the substrate (13), after printing, while adsorbing a lower surface thereof between the substrate support part (24) and the printing mask (25). The suction roll (22) is installed at a lower height than the leveling roll (21c), that is, at a position lower than the leveling roll (21c) with respect to the ground.

Meanwhile, the substrate support part (24) is installed below a transfer path of the substrate (13) and supports the substrate to prevent sagging when printing the laminated print (100b) on the pre-printed product (100a).

The substrate support part (24) includes a support frame (24a), a suction horizontal plate (24c), vertical rods (24f), and a suction plate cylinder (24b).

The support frame (24a) has a rectangular frame shape and is horizontally fixed inside the support structure (21). The support frame (24a) supports the vertical rods (24f) in a vertically movable manner. The vertical rods (24f) are round bars extending vertically while being supported by the support frame (24a). The suction horizontal plate (24c) is fixed to upper ends of the vertical rods (24f).

The suction horizontal plate (24c) is a rectangular horizontal plate that is vertically movable above the support frame (24a). As shown in FIG. 7, a negative pressure space (24g) is formed inside the suction horizontal plate (24c). The negative pressure space (24g) is connected to an external vacuum pump (not shown) and is open upward through a plurality of suction holes (24d).

When an internal pressure of the negative pressure space (24g) is reduced by the vacuum pump, air above the suction horizontal plate (24c) is drawn into the suction horizontal plate (24c). When the suction horizontal plate (24c) is raised to be in close contact with the lower surface of the substrate (13) and the vacuum pump is operated, the substrate (13) is fixed to the upper surface of the suction horizontal plate (24c) by the action of negative pressure. When the vacuum pump is stopped, the suction is released.

The suction plate cylinder (24b) is an element for moving the suction horizontal plate (24c) up and down. Through the suction plate cylinder (24b), the suction horizontal plate (24c) is raised or lowered within a predetermined stroke range.

The printing mask (25) is a member installed above the substrate support part (24) in a vertically adjustable manner. The printing mask (25) is formed with a plurality of printing holes (25c) through which the edible material to be laminated on the pre-printed product (100a) passes. The printing holes (25c) correspond one-to-one with the pre-printed products (100a).

The printing mask (25) is brought into close contact with an upper surface of the substrate during printing and, as shown in FIG. 8, has a plurality of printing holes (25c) through which the edible material passes. The printing mask includes a mask plate (25b) having a predetermined thickness and side walls (25a).

A lower surface of the mask plate (25b) is horizontal and can be brought into close contact with the upper surface of the substrate (13) as shown in FIG. 13A. The thickness of the mask plate (25b) may vary, but is at least greater than that of the pre-printed product (100a). As the thickness of the mask plate (25b) increases, the thickness of the laminated print (100b) correspondingly increases.

In the printing mask (25) shown in FIG. 7, the printing holes (25c) have a rectangular shape. As described above, since the printing holes (25c) correspond one-to-one with the pre-printed products (100a), when the printing mask (25) is brought into close contact with the upper surface of the substrate (13), the pre-printed products (100a) are inserted into the printing holes (25c). In this state, when the edible material (Z) is introduced into the printing holes (25c), the laminated print (100b) is formed.

The side walls (25a) form a rectangular frame integrally surrounding an upper surface of the mask plate (25b) and prevent the edible material (Z) supplied onto the mask plate (25b) from flowing outward.

The mask position adjusting unit is connected to the printing mask (25) and adjusts a position of the printing mask in X, Y, and Z directions as shown in FIG. 8. The printing mask (25) is capable of three-dimensional movement (front-rear, left-right, and up-down) by the mask position adjusting unit. The reason for enabling such positional adjustment is to align the printing holes (25c) with the pre-printed products (100a), since proper alignment is required for lamination of the laminated print (100b).

The mask position adjusting unit includes a mask support frame (26), a rod bracket (34 in FIG. 9), an X driving unit (27), a Y driving unit (28), and a Z driving unit (29).

The mask support frame (26) is a rectangular frame member and is horizontally fixed above the substrate support part. The printing mask is positioned below an inner region of the mask support frame (26). The mask support frame (26) further includes frame cylinders (32) at lower portions of its four corners. The frame cylinders (32) adjust a vertical position of the mask support frame (26) while being fixed to the support structure (21).

Y rails (26a in FIG. 9) are horizontally mounted on outer side surfaces of both ends of the mask support frame (26) in an X direction. The Y rails (26a) guide movement of sliding connectors (27f) in a Y direction.

The rod bracket (34) is a bar-shaped member having a central portion bent at a right angle and supports the printing mask (25) from an opposite side with the printing mask interposed therebetween. The rod brackets (34) on both sides are fixed to lower ends of connection bodies (27c). Since the connection bodies (27c) are indirectly fixed to the mask support frame (26), the rod brackets (34) are also maintained in a fixed state inside the mask support frame (26).

The X driving unit (27) adjusts the position of the printing mask (25) in a direction parallel to the transfer direction of the substrate while being supported by the mask support frame (26). The X driving unit (27) includes a first lead screw (27b), an X motor (27a), a connection body (27c), a first nut block (27d), and a sliding connector (27f).

The first lead screws (27b) are mechanical elements horizontally installed in a direction parallel to the transfer direction of the substrate and are arranged in parallel with each other. The first lead screws (27b) are rotationally driven by the X motor (27a) to reciprocate the first nut blocks (27d).

The X motor (27a) is supported by the sliding connector (27f) and rotates the first lead screws (27b) in clockwise or counterclockwise directions while maintaining a horizontal orientation. The sliding connector (27f) is a support member capable of positional adjustment in the Y direction while being supported by the Y rails (26a).

The first nut block (27d) is engaged with the first lead screw (27b) and fixed to the connection body (27c). The connection body (27c) is an L-shaped member, one end of which is fixed to the rod bracket (34). Accordingly, the printing mask (25) moves in the X direction by operation of the X motor (27a).

The sliding connector (27f) located on the right side in FIG. 9 is also supported by the Y rail (26a) and includes a second Y rail (27g) and an X rail (27k) on an upper side thereof. The second Y rail (27g) is parallel to the Y rail (26a) and supports the X rail (27k) such that the X rail (27k) is position-adjustable in the Y direction. The X rail (27k) slidably supports an end of the connection body (27c).

Accordingly, the X driving unit (27) itself is supported by the mask support frame (26) in a Y-direction-adjustable manner and moves the printing mask (25) in the X direction via the X motor (27a).

The Y driving unit (28) is installed on the mask support frame (26) and adjusts the position of the printing mask (25) in a direction perpendicular to the transfer direction of the substrate. The Y driving unit (28) includes a second lead screw (28c), a Y motor (28a), a second nut block (28e), and the sliding connector (27f).

The second lead screw (28c) is a mechanical element horizontally installed inside the mask support frame (26) and is rotationally driven by the Y motor (28a). The Y motor (28a) is horizontally fixed inside the mask support frame (26) and rotates the second lead screw (28c) in both directions.

The second nut block (28e) is engaged with the second lead screw (28c) and is coupled to the sliding connector (27f) through a side passage (26g). The side passage (26g) is a hole through which the second nut block (28e) passes. When the Y motor (28a) operates, the second nut block (28e) moves in the Y direction within the side passage (26g). At this time, the sliding connector (27f) connected to the nut block (28e) also moves together. Since the sliding connector (27f) is connected to the printing mask (25) through the connection body (27c), the printing mask (25) reciprocates in the Y direction.

The Z driving unit (29) is indirectly supported by the mask support frame (26) and moves the printing mask (25) up and down. The Z driving unit (29) includes Z cylinders (29a) fixed to both ends of the rod brackets (34) and connection arms (29b). The connection arms (29b) connect the Z cylinders (29a) and the printing mask (25) and move up and down by operation of the Z driving unit (29). Accordingly, the printing mask (25) performs vertical movement by the Z driving unit (29).

Meanwhile, the printing unit (30) supplies and spreads the edible material (Z) onto the upper portion of the position-adjusted printing mask (25), such that the edible material passes through the printing holes (25c) and is laminated on the pre-printed product (100a).

The printing unit includes a printing head (33), a support plate lifting unit, and a head driving unit.

The head driving unit reciprocates the printing head (33) so that the squeegee (39) spreads the edible material on the mask plate (25b). That is, as shown in FIGS. 13A and 13B, the printing head (33) is reciprocated in directions indicated by arrows R and S, thereby laminating the edible material onto the pre-printed product (100a).

The head driving unit includes a head transfer rail (31a), a slider (31c), and a supporter (31d). The head transfer rail (31a) is a linear member extending in a direction perpendicular to the transfer direction of the substrate (13), and two head transfer rails (31a) are spaced apart in parallel with the printing mask (25) interposed therebetween.

The sliders (31c) are slidably mounted on the respective head transfer rails (31a) and support both ends of the supporter (31d). A squeezing motor (31b) is installed on each slider (31c), and the sliders (31c) reciprocate by operation of the squeezing motor (31b). The supporter (31d) is a horizontal beam spanning above the printing mask (25), with both ends fixed to the sliders, and supports the printing head (33).

The support plate lifting unit serves to repeatedly raise and lower a lifting support plate (37) and includes a servo motor (36a), a belt (36e), a vertical screw (36g), and a nut portion (36h). A detailed description of the support plate lifting unit will be provided later.

The printing head (33) includes a lifting support plate (37), a material discharge part, a pair of squeegees (39), and a squeegee lifting means.

The lifting support plate (37) is a horizontal plate installed below the supporter (31d) so as to be movable up and down. The vertical movement of the lifting support plate (37) is performed by the support plate lifting unit and is guided by vertical guide rods (31e). Each vertical guide rod (31e) is a vertical round bar having an upper end fixed to the supporter (31d).

The support plate lifting unit serves to repeatedly raise and lower the lifting support plate (37) and includes a servo motor (36a), a belt (36e), a vertical screw (36g), and a nut portion (36h).

The servo motor (36a) is a rotational force generating unit installed vertically on a side of the supporter (31d) and includes a driving pulley (36b) on a drive shaft. The vertical screw (36g) is a vertical rod installed on the supporter (31d) so as to be rotatable about its axis and includes a male screw portion (36f) at a lower part thereof. A driven pulley (36d) is mounted on the vertical screw (36g) and is connected to the driving pulley (36b) via the belt (36e). Accordingly, when the servo motor (36a) is driven, the vertical screw (36g) rotates about its axis.

The nut portion (36h) is fixed to a lower surface of the lifting support plate (37) and is screw-coupled with the male screw portion (36f). Thus, as the vertical screw (36g) rotates, the lifting support plate (37) moves up and down.

The squeegees (39) are disposed below the lifting support plate (37) in parallel with each other and spaced apart, each having a squeezing blade (39a) at a lower end thereof. A squeegee lifting cylinder (38) is installed above each squeegee (39). The squeegee lifting cylinder (38) is fixed to the lifting support plate (37) and serves as the squeegee lifting means for raising and lowering the respective squeegee (39).

The squeegee lifting cylinders (38) on both sides alternately lower the squeegees. For example, when the left squeegee (39) is lowered, the right squeegee (39) is raised, and when the right squeegee (39) is lowered, the left squeegee is raised. When a squeegee (39) is lowered, as shown in FIG. 13, the squeezing blade (39a) comes into line contact with the mask plate (25b).

The material discharge part is installed between the two squeegees (39) and discharges the paste-type edible material supplied from the outside onto the printing mask. In the present embodiment, the material discharge part is a slit die (35). The slit die (35) is installed between the two squeegees (39) and is mounted on the left squeegee (39) as shown in FIG. 11.

A lower end of the slit die (35) is positioned higher than a lower end of the squeezing blade (39a) of the left squeegee (39) by a height H. Thus, while the squeezing blade (39a) is in contact with the mask plate (25b), the slit die (35) remains spaced apart therefrom.

As described above, when one squeegee (39) is lowered, the opposite squeegee (39) is raised. Accordingly, when the right squeegee (39) in FIG. 11 is lowered, the slit die (35) is raised further above the height H.

As such, since the slit die (35) is always spaced apart from the mask plate (25b), the discharge of the edible material (Z) from the slit die (35) is always smoothly performed.

The slit die (35) has a structure as shown in FIG. 12.

As illustrated, the slit die (35) includes a first die half (35e), a second die half (35a), and an end plate (35k). The first and second die halves (35e, 35a) are coupled in close contact with each other and allow the edible material to pass through an interior thereof.

The first die half (35e) is provided with an inlet passage (35f) through which the edible material (Z) supplied via a material supply tube (35m in FIG. 10) is guided into a bank (35b).

The second die half (35a) is formed with the bank (35b) and a plurality of discharge slits (35c). The bank (35b) is a space in which the edible material supplied through the inlet passage (35f) is temporarily collected. The discharge slits (35c) are flow paths through which the edible material in the bank (35b) is discharged downward in a direction indicated by arrow d.

Intervals between the discharge slits (35c) correspond to intervals between the printing holes (25c) of the printing mask (25). The edible material discharged downward through the discharge slits (35c) is applied onto the mask plate (25b) in the form of strips having a predetermined width. The end plate (35k) serves to fix the first and second die halves (35e, 35a). The number of discharge slits may vary; for example, a single discharge slit may be provided.

The squeegee lifting means is a squeegee cylinder (38) positioned above the lifting support plate (37) and configured to independently raise and lower each squeegee. The squeegees (39) on both sides perform vertical movement by the squeegee cylinders (38), which alternately lower the squeegees. As described, when one squeegee (39) is lowered, the opposite squeegee is raised.

FIG. 13A illustrates a state in which the printing head (33) moves in a direction indicated by arrow R.

Referring to FIG. 13A, the edible material (Z) is discharged from the slit die (35), and the squeegee (39) following the slit die (35) is in a lowered state to spread the edible material (Z) on the upper surface of the mask plate (25b). The edible material (Z) is pushed by the squeezing blade (39a) and enters the printing holes (25c), thereby being printed on the pre-printed product (100a). The squeegee (39) preceding the slit die (35) remains in a raised state.

As shown in FIG. 13B, after the printing head (33) has completely moved in the direction of arrow R, it moves in the opposite direction, i.e., in the direction of arrow S, while pushing the edible material (Z). At this time, the right squeegee (39) in the figure is lowered, and the left squeegee (39) is raised. While the printing head (33) moves in the direction of arrow S, the right squeezing blade (39a) pushes the edible material (Z) and fills the printing holes (25c).

After completion of the printing process as described above, the suction horizontal plate (24c) is lowered and the printing mask (25) is raised, and then the substrate is moved in a direction indicated by arrow P in FIG. 6, and the printing process is repeated.

Meanwhile, the heating dryer (50) serves to dry the laminated print (100b) printed on the substrate that has passed through the laminating printer (20). The heating dryer (50) includes a cabinet (51), a heater (53), and a temperature sensor (54). The cabinet (51) is a case through which the substrate (13) passes and accommodates the heater (53) and the temperature sensor (54).

The temperature sensor (54) detects a temperature of the substrate (13) and transmits temperature information to a controller (not shown). The controller adjusts a heating temperature of the heater (53) to an optimal range. The heating method of the heater (53) may be implemented in various ways.

In addition, a pressing roller (55) is further installed inside the cabinet (51). The pressing roller (55) is disposed downstream of the suction roll (22) and contacts an upper surface of the substrate passing through the suction roll to support the substrate downward.

As described above, the outer circumferential surface of the pressing roller (55) is formed with a passing groove (55a) and a pressing ring portion (55b). The passing groove (55a) is a groove having a predetermined width and depth formed along the circumferential direction of the pressing roller (55), through which the edible product (100) printed on the substrate (13) passes. The pressing ring portion (55b) is a protruding portion extending along the circumferential direction of the pressing roller (55) and presses the substrate while contacting an upper surface thereof. Since the passing groove (55a) is formed in the pressing roller (55), even when the substrate (13) passes under the pressing roller (55) during transfer, there is no risk of the edible product (100) being pressed and damaged, and a tensioned state of the substrate (13) is stably maintained.

Although the present invention has been described in detail with reference to specific embodiments, the present invention is not limited thereto, and various modifications may be made by those skilled in the art within the scope of the technical spirit of the present invention.

### [Industrial Applicability]

By additionally laminating a printed layer on a previously printed material layer, products having various configurations can be produced, thereby providing industrial applicability.

## Claims

1. A mask printing-type edible material laminating apparatus for passing a substrate on which a pre-printed product made of an edible material is printed and additionally printing a laminated print made of an edible material on the pre-printed product, the apparatus comprising:
a support structure providing structural support;
a substrate guide means mounted within the support structure for guiding transfer of the substrate;
a substrate support part installed below a transfer path of the substrate to support the substrate when printing the laminated print on the pre-printed product;
a printing mask installed above the substrate support part in a position-adjustable manner and having a plurality of printing holes through which the edible material to be laminated on the pre-printed product passes;
a mask position adjusting unit for adjusting a position of the printing mask; and
a printing unit configured to spread the edible material after supplying the edible material onto the position-adjusted printing mask such that the edible material passes through the printing holes and is laminated on the pre-printed product.

2. The mask printing-type edible material laminating apparatus of claim 1,
wherein a plurality of the pre-printed products are arranged at predetermined intervals on an upper surface of the substrate, and
the printing holes of the printing mask correspond one-to-one with the pre-printed products.

3. The mask printing-type edible material laminating apparatus of claim 2,
wherein the mask position adjusting unit aligns the printing holes with the pre-printed products, and includes:
a mask support frame fixed horizontally above the substrate support part and accommodating the printing mask therein;
an X driving unit for moving the printing mask in a direction parallel to a transfer direction of the substrate while being supported by the mask support frame;
a Y driving unit installed on the mask support frame for adjusting a position of the printing mask in a direction perpendicular to the transfer direction of the substrate; and
a Z driving unit supported by the mask support frame for vertically moving the printing mask.

4. The mask printing-type edible material laminating apparatus of claim 3,
wherein the X driving unit includes:
a first lead screw horizontally installed in a direction parallel to the transfer direction of the substrate;
an X motor for rotationally driving the first lead screw; and
a connection body coupled to the first lead screw, configured to reciprocate linearly upon rotation of the first lead screw, and coupled to the printing mask.

5. The mask printing-type edible material laminating apparatus of claim 3,
wherein the Y driving unit includes:
a second lead screw horizontally installed in a direction perpendicular to the transfer direction of the substrate;
a Y motor for rotationally driving the second lead screw; and
a second nut block coupled to the second lead screw,
configured to reciprocate linearly upon rotation of the second lead screw, and connected to the printing mask.

6. The mask printing-type edible material laminating apparatus of claim 2,
wherein the printing unit includes:
a printing head having a material discharge part for supplying the edible material onto the printing mask, a squeegee for spreading the supplied edible material on a mask plate, and a squeegee lifting means for moving the squeegee up and down;
and
a head driving unit configured to reciprocate the printing head such that the squeegee spreads the edible material on the mask plate.

7. The mask printing-type edible material laminating apparatus of claim 6,
wherein the head driving unit includes:
a head transfer rail extending in a direction perpendicular to the transfer direction of the substrate;
a slider slidably mounted on the head transfer rail; and
a supporter fixed to the slider and supporting the printing head,
wherein the printing unit further includes:
a lifting support plate supported by the supporter so as to be movable up and down; and a support plate lifting unit for adjusting a height of the lifting support plate, and
wherein the squeegee comprises two squeegees disposed in parallel and spaced apart from each other below the lifting support plate with the material discharge part interposed therebetween, and
the squeegee lifting means comprises squeegee cylinders for independently lifting the respective squeegees.

8. The mask printing-type edible material laminating apparatus of claim 7,
wherein the material discharge part is a slit die including:
a bank serving as a space for temporarily accommodating the edible material supplied from the outside; and
one or more discharge slits for downwardly discharging the edible material in the bank onto the printing mask.
